# EUROPÄISCHE PATENTSCHRIFT

(11) **EP 0 826 266 B1**
(45) Veröffentlichungstag und Bekanntmachung des Hinweises auf die Patenterteilung: **25.11.1998**
(21) Anmeldenummer: 96913458.4
(22) Anmeldetag: 02.05.1996
(51) Int. Cl.: H02K 9/06, F04D 25/02

(54) **ELEKTROMOTORISCHER ANTRIEB**
ELECTRIC MOTOR DRIVE
SYSTEME D'ENTRAINEMENT ASSURE PAR MOTEUR ELECTRIQUE

(30) Priorität: 16.05.1995 DE 19517989
(43) Veröffentlichungstag der Anmeldung: 04.03.1998
(73) Patentinhaber: SIEMENS AKTIENGESELLSCHAFT, 80333 München (DE)
(72) Erfinder: LIENERT, Wolfgang, D-90449 Nürnberg (DE)
(86) Internationale Anmeldenummer: DE9600765
(87) Internationale Veröffentlichungsnummer: WO9637035

(56) Entgegenhaltungen:
- EP-A- 0 050 771
- FR-A- 2 506 536
- US-A- 4 239 095

## Beschreibung

Die Erfindung betrifft einen elektromotorischen Antrieb, insbesondere für Schienenfahrzeuge und spurgebundene Fahrzeuge, mit einem Elektromotor und wenigstens einem auf der Motorwelle angeordneten Lüfterrad, wobei eine von der Motordrehzahl abhängige elektromagnetische Schlupfkupplung zwischen der Motorwelle und dem frei drehbar auf der Motorwelle gelagerten Lüfterrad angeordnet ist.

Elektromotoren für schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten. Gemäß der DE-B-25 14 265 ist zur Motorkühlung ein fest auf der Motorwelle angeordnetes Lüfterrad vorgesehen, das mit der jeweiligen Motordrehzahl angetrieben wird und die Umgebungsluft entweder durch den Motor oder durch spezielle Außen-Kühlkanäle saugt oder drückt.

Um von der Umgebungsluft und der Luftfördermenge des Motors unabhängig zu sein, wurden auch schon aufwendige Fremdkühlsysteme vorgeschlagen, die entweder auf der Basis einer Fremdbelüftung mit Luftführung und eigenem Gebläsemotor oder auf der Basis einer Wasserkühlung arbeiten. Diese Kühlsysteme und ihre Steuerungen sind sehr aufwendig.

Um das durch einen Ventilator mit zunehmender Rotationsgeschwindigkeit ansteigende Motorengeräusch zu reduzieren, ist aus der CH-A-664 242 ein Kühlluftventilator für eine drehende elektrische Maschine bekannt, mit einem an einem Joch befestigten Stator und einem auf einer drehbar auf dem Joch gestützten Welle befestigten Rotor, wobei der Kühlluftventilator drehbar mittels eines Lagers auf der Welle angeordnet ist. Eine Mehrzahl von Magnetpaaren sind auf dem Rotor oder dem Ventilator befestigt. Eine nicht eisenhaltige Scheibe ist am Ventilator oder dem Rotor befestigt und weist einen ringförmigen, zwischen den Magnetpaaren angeordneten Flansch auf. Der Ventilator wird durch die Wechselwirkung zwischen den Magneten und im Scheibenflansch induzierten Wirbelströmen angetrieben. Es tritt ein als Funktion der Geschwindigkeit ansteigender Schlupf auf, wobei der durch den Ventilator bewirkte Geräuschpegel reduziert wird. Bei hohen Motordrehzahlen kann es bei ausreichender Fahrtwindkühlung wünschenswert sein, daß die Mitnahmewirkung der Kupplung bis zur Wirkungslosigkeit aufhebbar ist. Dies läßt sich mit der bekannten Magnetkupplung nicht erreichen.

Es wurde gefunden, daß bei der eingangs beschriebenen Motorkühlung mittels eines fest auf der Motorwelle sitzenden Lüfterrades die Kühlluftmenge in hohem Maße drehzahlproportional zur jeweiligen Motordrehzahl ist, wodurch in der Regel im Bereich hoher Drehzahlen eine zur Kühlung nicht erforderliche große Kühlluftmenge entsteht, die einen hohen Energieverbrauch und erhebliche Störgeräusche verursacht. Der hohe Energieaufwand trägt seinerseits wieder zu einer unnötigen Erwärmung des Antriebsmotors bei.

Aufgabe der Erfindung ist es, einen elektromotorischen Antrieb der eingangs genannten Art bezüglich Kühlung, Funktionssicherheit und Aufbau zu verbessern und zu vereinfachen.

Erfindungsgemäß wird diese Aufgabe durch die Merkmale des Patentanspruches 1 gelöst. Damit wird erreicht, daß die Kühlluftmenge bei niedrigeren Motordrehzahlen in ausreichendem Maße zur Verfügung steht, während die zu fördernde Kühlluftmenge bei höheren oder hohen Motordrehzahlen nicht mehr proportional zur steigenden Motordrehzahl ansteigt, Dadurch, daß für die Lüfterradnabe eine axiale Fixierung zur Motorwelle vorgesehen ist wird die Montage der Kupplung vereinfacht.

Dabei wird eine an den Fahrbetrieb angepaßte Motorkühlung erreicht, ohne daß auf die bekannte Fremdbelüftung oder Wasserkühlung zurückgegriffen werden muß und ohne einen großen technischen Bauaufwand bzw. die Notwendigkeit, spezielle und teuere Schalt- und Überwachungsgeräte einzusetzen. Ferner kann der elektromotorische Antrieb mit einfacher und robuster Eigenbelüftung ausgeführt werden.

In vorteilhafter Ausführung kann gemäß der Erfindung die Drehzahlproportionalität der Kühlluftmenge nur bis zu einer für die Kühlungsanforderungen ausreichenden Drehzahl beibehalten und ab dieser Motordrehzahl das Lüfterrad mit geringerer Drehzahl angetrieben werden, so daß der Energieverbrauch und die Geräusche des Gebläses deutlich reduzierbar sind.

Bei einer Ausgestaltung der Erfindung wird die Funktionssicherheit des Antriebs erhöht, in dem zwischen dem Lager des Lüfterrades und den elektromagnetischen Teilen eine Wärmedämmung mit Abstandshalter angeordnet ist.

Vorteilhafte Ausgestaltungen der Erfindung sind in den weiteren Patentansprüchen angegeben.

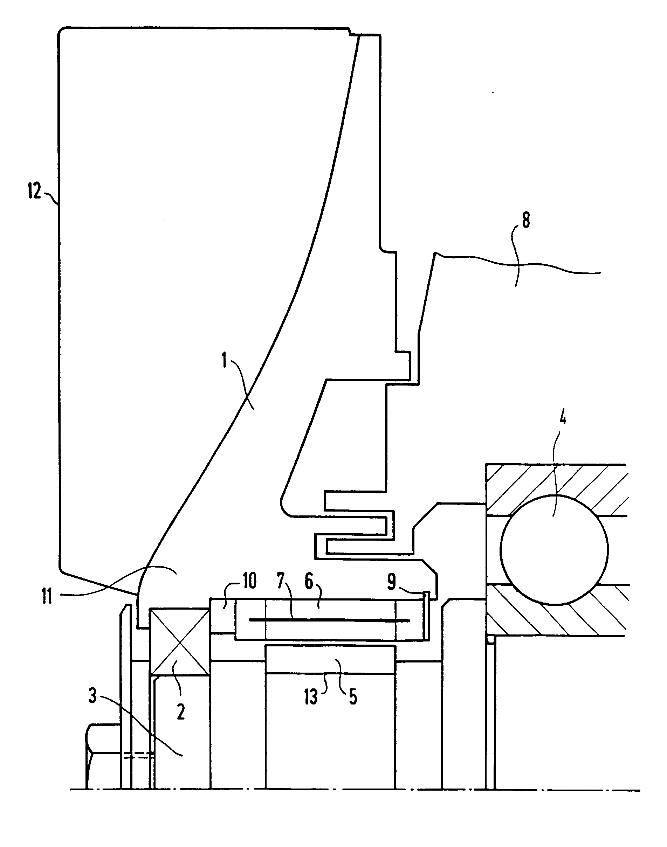

Die Erfindung wird im folgenden an einem Ausführungsbeispiel unter Hinweis auf die Zeichnung erläutert, die einen Teilschnitt durch einen erfindungsgemäßen elektromotorischen Antrieb zeigt, wie er insbesondere für mit hohen Drehzahlen betreibbare Drehstrom-Bahnmotoren geeignet ist.

Von einem an sich bekannten Elektromotor 8 ist ein Motorlager 4 und eine Motorwelle 3 dargestellt. Auf die Motorwelle 3 ist zur Luftkühlung des Elektromotors 8 ein Lüfterrad 1 aufgesetzt. Dabei ist die Lüfterradnabe 11 unter Zwischenordnung eines Lagers 2 frei drehbar auf der Motorwelle 3 abgestützt, so daß das Lüfterrad ohne direkten Antrieb mit dem Motor 8 gekuppelt ist.

Zwischen dem frei drehbar auf der Motorwelle 3 gelagerten Lüfterrad 1 und der Motorwelle befindet sich eine elektromagnetische Drehzahlbegrenzungs- und -Regelungseinrichtung für das Kühlluftgebläse. Diese im Ausführungsbeispiel als elektromagnetische Schlupfkupplung 5-7 ausgelegte Einrichtung wirkt in der Weise, daß mit steigender Motordrehzahl, insbesondere ab einem bestimmten Drehzahlbereich, über die Schlupfkupplung die Antriebswirkung auf das Lüfterrad abnimmt. Andererseits bewirkt die Schlupfkupplung bei einer unter einen bestimmten Drehzahlbereich abfallenden Motordrehzahl, daß die Antriebswirkung der Kupplung auf das Lüfterrad wieder zunimmt.

Im gezeichneten Ausführungsbeispiel trägt die Motorwelle 3 in einer z.B. ringförmigen Ausnehmung 13 Permanentmagnete 5, während das Lüfterrad 1 bzw. die Lüfterradnabe 11 mit einer oder mehreren Kurzschluß- oder Käfigwicklungen 7 bestückt ist, die vorzugsweise in magnetisches Material 6 eingebettet sind. Dabei ist in dem Ausführungsbeispiel die Anordnung so getroffen, daß zwischen dem Lüfterradlager 2 und den elektromagnetischen Teilen 6, 7 eine Wärmedämmung mit Abstandshalter 10 und auf der dem Motor 8 zugewandten Seite der Teile 6, 7 eine axiale Fixierung 9 vorgesehen ist. Mit 12 ist ein Lüfterradflügel bezeichnet.

Gemäß einem nicht dargestellten Ausführungsbeispiel können die Permanentmagnete auch am Lüfterrad und die elektrischen Teile 6, 7 dann an der Motorwelle angeordnet sein. Die magnetische Erregung der Schlupfkupplung erfolgt über die Permanentmagnete und aufgrund der Drehung der Motorwelle 3 bzw. des Lüfterrades 1. Das zur Mitnahme des Lüfterrades erforderliche Drehmoment entsteht durch Induzierung einer elektrischen Spannung in der Kurzschlußwicklung 7 in gleicher prinzipieller Art wie bei einer Asynchronmaschine mit Käfigläufer. Die Käfigwicklung kann - abhängig von der Anbringung der Permanentmagnete - entweder im Lüfterrad oder auf der Motorwelle angeordnet sein und ist im magnetischen Material 6 eingebettet. Die Anordnung ist insbesondere so bemessen, daß - abgesehen von eventuellen Reaktionsmomenten - das maximale Moment (Kippmoment) bei einer vorgegebenen Drehzahl erreicht wird, bei der es zur Überwindung des Druckabfalles des aerodynamischen Kreises gerade ausreicht. Diese Drehzahl wird im allgemeinen zwischen 60 und 70% der höchsten Motordrehzahl liegen. Steigt nun die Motordrehzahl über diesen Wert, so stellt sich aufgrund der Drehmoment-Schlupf-Kennlinie der Kupplung für das Lüfterrad eine niedrigere Drehzahl ein, wodurch Kühlluftmenge, Energieaufwand und Geräusch des Lüfters sinken.

## Patentansprüche

1. Elektromotorischer Antrieb, insbesondere für Schienenfahrzeuge und spurgebundene Fahrzeuge, mit einem Elektromotor (8) und wenigstens einem auf der Motorwelle (3) angeordneten Lüfterrad (1), wobei eine von der Motordrehzahl abhängige elektromagnetische Schlupfkupplung zwischen der Motorwelle und dem frei drehbar auf der Motorwelle gelagerten Lüfterrad angeordnet ist, wobei eine elektromagnetische Drehzahlbegrenzungs- und Regelungseinrichtung (5-7) zwischen der Motorwelle (3) und dem Lüfterrad (1) vorgesehen ist, welche die Kühlluftförderung auf die erforderliche Kühlluftmenge begrenzt, wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis beinahe zur Wirkungslosigkeit aufhebbar ist und bei abfallender Motordrehzahl wieder bis auf die volle Mitnahmewirkung zunimmt, wobei das Lüfterrad (1) über ein in die Lüfterradnabe (11) eingesetztes Lager (2) frei drehbar auf der Motorwelle (3) gelagert ist, wobei die Lüfterradnabe eine axiale Fixierung (9) zur Motorwelle (3) aufweist und wobei die Motorwelle (3) Permanentmagnete (5) trägt und in der Nabe (11) des Lüfterrades (1) eine Kurzschlußwicklung (7) vorgesehen ist oder das Lüfterrad mit Permanentmagneten und die Motorwelle mit einer Kurzschlußwicklung versehen ist.

2. Elektromotorischer Antrieb nach Anspruch 1, **dadurch gekennzeichnet,** daß die Kurzschlußwicklung (7) in magnetisierbares Material (6) eingebettet ist.

3. Elektromotorischer Antrieb nach Anspruch 1, **dadurch gekennzeichnet**, daß zwischen dem Lager (2) des Lüfterrades und den elektromagnetischen Teilen (5-7) eine Wärmedämmung mit Abstandshalter (10) angeordnet ist.

4. Elektromotorischer Antrieb nach einem der Ansprüche 1 bis 3, **dadurch gekennzeichnet,** daß das Lüfterrad (1) für gekapselte oder durchzugsbelüftete Elektromotoren (8) auf deren Motorwelle (3) für Saug- oder Druckbelüftung frei gelagert und ausgebildet ist.

5. Elektromotorischer Antrieb nach einem der Ansprüche 1 bis 4, **dadurch gekennzeichnet,** daß die Permanentmagnete (5) und/oder die in magnetisierbares Material (6) eingebettete Kurzschlußwicklung bzw. -wicklungen (7) ringförmig oder abschnittsweise ringförmig in die Nabe (11) des Lüfterrades (1) oder in die Motorwelle (3) eingelassen sind.

6. Elektromotorischer Antrieb nach einem der Ansprüche 1 bis 5, **dadurch gekennzeichnet,** daß die Teile der elektromagnetischen Schlupfkupplung (5-7) so bemessen sind, daß das maximale Kippmoment bzw. die höchste Mitnahmewirkung zwischen der Motorwelle und dem Lüfterrad bei einer vorgegebenen Motordrehzahl erreicht wird, bei der es zur Überwindung des Druckabfalles des aerodynamischen Kreises gerade ausreicht, wobei diese Drehzahl etwa im Bereich zwischen 60 und 70% der höchsten Motordrehzahl liegt.

7. Elektromotorischer Antrieb nach den Ansprüchen 1 bis 6, **dadurch gekennzeichnet**, daß er für mit hohen Drehzahlen betreibbare Drehstrom-Bahnmotoren vorgesehen ist.

## Claims

1. Electric motor drive, in particular for rail vehicles and track-bound vehicles, having an electric motor (8) and at least one fan impeller (1) arranged on the motor shaft (3), wherein an electromagnetic slipping clutch is arranged between the motor shaft and the fan impeller which is mounted in a freely rotatable manner on the motor shaft, the slipping clutch being dependent on the motor speed, wherein an electromagnetic speed limiting and controlling device (5-7) is provided between the motor shaft (3) and the fan impeller (1), which device limits the conveyance of cooling air to the necessary quantity of cooling air, wherein after a specifiable motor speed the fan impeller speed can be reduced compared with the motor speed in such a way that, as the speed of the motor shaft increases, the entrainment effect of the slipping clutch can be cancelled until it is almost ineffective, and, as the motor speed decreases, it increases again up to the full entrainment effect, wherein the fan impeller (1) is mounted in a freely rotatable manner on the motor shaft (3) by way of a bearing (2) inserted into the fan impeller hub (11), wherein the fan impeller hub has an axial fixing (9) to the motor shaft (3), and wherein the motor shaft (3) supports permanent magnets (5), and in the hub (11) of the fan impeller (1) a cage winding (7) is provided or the fan impeller is provided with permanent magnets and the motor shaft is provided with a cage winding.

2. Electric motor drive according to claim 1, characterized in that the cage winding (7) is embedded in magnetizable material (6).

3. Electric motor drive according to claim 1, characterized in that thermal insulation with spacer (10) is arranged between the bearing (2) of the fan impeller and the electromagnetic parts (5-7).

4. Electric motor drive according to one of claims 1 to 3, characterized in that the fan impeller (1) for enclosed or through-ventilated electric motors (8) is freely mounted and constructed on their motor shaft (3) for suction ventilation or forced ventilation.

5. Electric motor drive according to one of claims 1 to 4, characterized in that the permanent magnets (5) and/or the cage winding or windings (7) embedded in magnetizable material (6) are let into the hub (11) of the fan impeller (1) or into the motor shaft (3) in an annular manner or in sections in an annular manner.

6. Electric motor drive according to one of claims 1 to 5, characterized in that the parts of the electromagnetic slipping clutch (5-7) are dimensioned in such a way that the maximum breakdown torque or the greatest entrainment effect between the motor shaft and the fan impeller is achieved at a specified motor speed at which it is just sufficient to overcome the pressure drop of the aerodynamic circuit, with this speed approximately lying in the region of between 60 and 70% of the highest motor speed.

7. Electric motor drive according to claims 1 to 6, characterized in that it is provided for rotary current traction motors which can be operated at high speeds.

## Revendications

1. Système d'entraînement par moteur électrique, notamment pour véhicules sur rails ou pour des véhicules guidés, comprenant un moteur électrique (8) et au moins une roue de ventilateur (1) disposée sur l'arbre de moteur (3), un accouplement à induction électromagnétique, fonction de la vitesse de rotation du moteur, étant disposé entre l'arbre de moteur et la roue de ventilateur montée librement tournante sur l'arbre de moteur, un dispositif électromagnétique de limitation de la vitesse de rotation et de régulation (5-7), qui limite le refoulement d'air de refroidissement à la quantité d'air de refroidissement nécessaire, étant prévu entre l'arbre de moteur (3) et la roue de ventilateur (1), la vitesse de rotation de la roue de ventilateur pouvant être réduite par rapport à la vitesse de rotation du moteur à partir d'une vitesse de rotation du moteur pouvant être prescrite, de façon telle que pour une vitesse de rotation croissante de l'arbre de moteur, l'effet d'entraînement de l'accouplement à induction puisse être annulé pratiquement jusqu'à sa suppression complète, et qu'il augmente à nouveau jusqu'à l'effet d'entraînement total lorsque la vitesse de rotation du moteur décroît, la roue de ventilateur (1) étant montée librement tournante sur l'arbre de moteur (3) par l'intermédiaire d'un palier (2) inséré dans le moyeu (11) de la roue de ventilateur, le moyeu de la roue de ventilateur présentant une fixation axiale (9) par rapport à l'arbre de moteur (3), et l'arbre de moteur (3) portant des aimants permanents (5) et un enroulement à court-circuit (7) étant prévu dans le moyeu (11) de la roue de ventilateur (1), ou bien la roue de ventilateur est pourvue d'aimants permanents et l'arbre de moteur d'un enroulement à court-circuit.

2. Système d'entraînement par moteur électrique selon la revendication 1, **caractérisé** en ce que l'enroulement à court-circuit (7) est noyé dans du matériau (6) magnétisable.

3. Système d'entraînement par moteur électrique selon la revendication 1, **caractérisé** en ce qu'entre le palier (2) de la roue de ventilateur et les parties électromagnétiques (5-7) est disposée une isolation thermique comprenant une entretoise (10).

4. Système d'entraînement par moteur électrique selon l'une des revendications 1 à 3, **caractérisé** en ce que la roue de ventilateur (1) est conçue pour des moteurs électriques (8) à capotage ou blindés ventilés, et est montée librement sur leur arbre de moteur (3) pour une ventilation par aspiration ou par refoulement.

5. Système d'entraînement par moteur électrique selon l'une des revendications 1 à 4, **caractérisé** en ce que les aimants permanents (5) et/ou l'enroulement ou les enroulements à court-circuit (7) sont noyés sous forme annulaire ou par tronçons annulaires dans le moyeu (11) de la roue de ventilateur (1) ou dans l'arbre de moteur (3).

6. Système d'entraînement par moteur électrique selon l'une des revendications 1 à 5, **caractérisé** en ce que les parties de l'accouplement à induction électromagnétique (5-7) sont dimensionnées de manière telle, que le couple de basculement maximal ou l'effet d'entraînement le plus élevé entre l'arbre de moteur et la roue de ventilateur est atteint pour une vitesse de rotation du moteur prescrite, juste suffisante pour surmonter la perte de charge du circuit aérodynamique, cette vitesse de rotation se situant environ dans la plage entre 60 et 70% de la vitesse de rotation la plus élevée du moteur.

7. Système d'entraînement par moteur électrique selon les revendications 1 à 6, **caractérisé** en ce qu'il est prévu pour des moteurs ferroviaires à courant triphasé fonctionnant à des vitesses de rotation élevées.
